# EUROPÄISCHE PATENTANMELDUNG

(11) **EP 0 890 490 A1**
(43) Veröffentlichungstag der Anmeldung: **13.01.1999**
(21) Anmeldenummer: 98111286.5
(22) Anmeldetag: 18.06.1998
(51) Int. Cl.: B60R 22/24

(54) **Umlenkbeschlag für Sicherheitsgurte**

(30) Priorität: 11.07.1997 DE 19729759
(71) Anmelder: TAKATA (EUROPE) VEHICLE SAFETY TECHNOLOGY GmbH, 89081 Ulm (DE)
(72) Erfinder: Kopetzky, Robert, 89173 Lonsee (DE); Pleyer, Matthias, 89250 Senden (DE)
(74) Vertreter: Schmidt, Christian

(57) **Zusammenfassung**

Die Erfindung betrifft einen Umlenkbeschlag für Sicherheitsgurte mit einem an einem Fahrzeugteil befestigbaren Bügel (11), der aus zwei miteinander verbundenen Schenkeln (13, 14) besteht, zwischen deren freien Enden sich ein Lagerschaft (15) erstreckt, auf dem eine Umlenkrolle (16) um eine Drehachse drehbar gelagert ist, deren Länge zumindest im wesentlichen der Breite des darüber geführten Gurtes entspricht. Erfindungsgemäß ist dabei vorgesehen, daß der Bügel (11) aus einem um den Lagerschaft (15) herum auf sich selbst zusammengefalteten, insbesondere aus Stahlblech bestehenden Stanzteil gebildet ist.

## Beschreibung

Die Erfindung betrifft einen Umlenkbeschlag für Sicherheitsgurte nach dem Oberbegriff des Patentanspruchs 1. Derartige Umlenkbeschläge werden bei Kraftfahrzeugen verwendet, um den von einer Gurtrolle abgewickelten Gurt zum Fahrgast hin umzulenken.

Als Stanzteil ausgebildete Bügel bei derartigen Umlenkbeschlägen sind bereits bekannt (EP 0 726 187 A1).

Um die erheblichen Kräfte sicher aufnehmen zu können, die auf derartige Umlenkbeschläge wirken, muß das Material für das Stanzteil jedoch relativ dick sein, was einerseits einen hohen Materialaufwand erfordert und auch die Herstellung erschwert.

Das Ziel der Erfindung besteht darin, einen Umlenkbeschlag der eingangs genannten Gattung zu schaffen, der ebenfalls als billig zu fertigendes Stanzteil ausgebildet sein kann, jedoch nur ein relativ dünnes Blechmaterial erfordert, ohne daß das erforderliche Kraftaufnahmevermögen beeinträchtigt wird.

Zur Lösung dieser Aufgabe sind die Merkmale des Patentanspruchs 1 vorgesehen.

Durch Zusammenfaltung eines im wesentlichen symmetrischen Stahlblechstanzteils wird die Materialstärke des fertiggestellten Umlenkbeschlages verdoppelt, so daß mit einem relativ dünnen Stahlblech alle Kraftaufnahmeerfordernisse des daraus hergestellten Umlenkbeschlages erfüllt werden können.

Die Herstellung erfolgt einfach dadurch, daß das Stanzteil durch Ausstanzen aus einer Blechplatte hergestellt und dann um einen Dorn auf sich selbst herumgefaltet wird, dessen Durchmesser dem Durchmesser des Lagerschaftes der Umlenkrolle entspricht.

Bevorzugt wird der Lagerschaft von den umgebenden Längsstreifen fest eingespannt und die Drehbewegung durch Gleitlager zwischen der Umlenkrolle und dem Lagerschaft gewährleistet.

Grundsätzlich ist es aber auch denkbar, daß eine Umlenkrolle mit beidseits von ihr vorstehenden Lagerzapfen verwendet wird, die sich in den um sie herum gelegten Längsstreifen im Sinne eines Gleitlagers drehen können. In diesem Fall müßte allerdings der Umlenkbeschlag durch Herumbiegen der Längs-streifen um die betreffenden Zapfen hergestellt werden.

Vorteilhafte Ausführungsformen der Erfindung sind in der Beschreibung, den Zeichnungen sowie den Unteransprüchen beschrieben.

Aufgrund der Maßnahmen nach den Ansprüchen 7 bis 9 kann der Umlenkbeschlag an einem Fahrzeugpfosten so befestigt werden, daß die Umlenkrolle einen für die Beweglichkeit des Gurtes erforderlichen ausreichenden Abstand vom Pfosten hat.

An den Innenrändern der Schenkel sind vorzugsweise anschließend an die Umlenkrolle Ausstanzungen bzw. Ausarbeitungen vorgesehen, die auch bei großen Umschlingungswinkeln ein Stauchen oder Verklemmen des Gurtbandes verhindern.

Die Erfindung hat auch Verfahren zum Gegenstand, mittels denen ein stark belastbarer Umlenkbeschlag besonders wirtschaftlich auch in Massenfertigung herstellbar ist.

Die Erfindung wird im folgenden beispielhaft anhand der Zeichnung beschrieben; in dieser zeigt:
- Figur 1: eine Draufsicht eines erfindungsgemäßen Stahlblechstanzteils zur Herstellung eines Umlenkbeschlages,
- Figur 2: eine Seitenansicht eines aus dem Stanzteil nach Figur 1 hergestellten Bügels mit eingesetzter Umlenkrolle,
- Figur 3: eine Draufsicht des Gegenstandes der Figur 2,
- Figur 4: eine Seitenansicht des Gegenstandes der Figur 2
- Figur 5: eine perspektivische Ansicht schräg von vorn des Gegenstandes der Figuren 2 bis 4 in etwas verkleinertem Maßstab.
- Figur 6: eine Seitenansicht einer weiteren Ausführungsform der Erfindung.

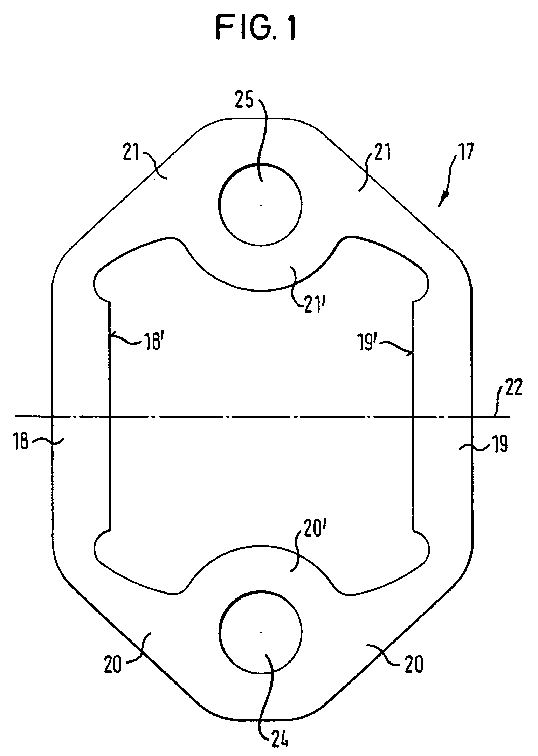

Nach Figur 1 weist ein erfindungsgemäßes rahmenförmiges Stanzteil 17 eine grundsätzlich ovale Form auf bzw. eine Sechseckform mit abgerundeten Ecken. Es besteht aus zwei parallel zueinander verlaufenden Blech-Längsstreifen 18, 19 mit geradlinigen Innenrändern 18', 19'.

An ihren beiden Enden gehen die beiden Längsstreifen 18, 19 über Abrundungen in schräg verlaufende Streifen 20, 21 über, die sich in der Mitte nach innen zu Schraubbefestigungsbereichen 20', 21' erweitern, in denen Schraublöcher 24, 25 vorgesehen sind.

Das ebene Stanzteil 17 besteht aus zwei Hälften, die zu einer in der Ebene des Stanzteils 17 liegenden Symmetrieachse 22 spiegelsymmetrisch sind, welche sich senkrecht zu den geradlinigen Längsstreifen 18, 19 in deren Mitte erstreckt.

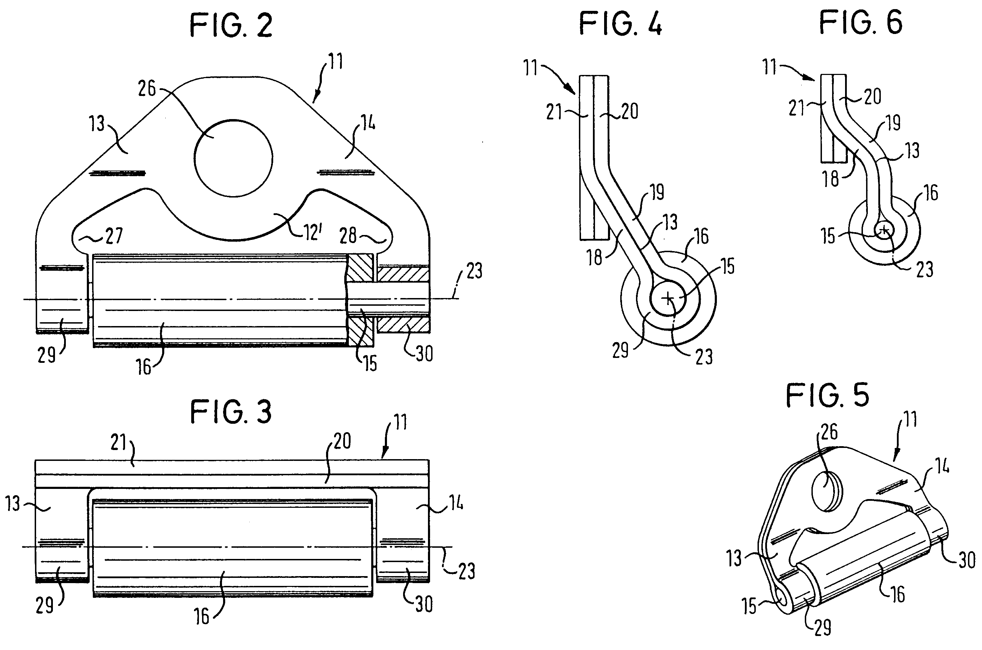

Erfindungsgemäß werden die beiden zur Symmetrieachse 22 spiegelsymmetrischen Hälften des Stanzteils 17 nach Figur 1 um einen Dorn, dessen Durchmesser dem Durchmesser des Lagerschaftes 15 (Figuren 2 bis 6) der später einzubauenden Umlenkrolle 16 entspricht, herumgebogen und dann so aufeinander gepreßt, daß die beiden Hälften flach aufeinander liegen und ein Bügel 11 entsteht, wie er den Figuren 2 bis 6 zu entnehmen ist. Die Streifen 20, 21 kommen dabei ebenso wie die Schraublöcher 24, 25 deckungsgleich aufeinander zu liegen. Auf diese Weise wird in dem Bügel 11 ein Schraubloch 26 ausgebildet.

Die beiden weitgehend aufeinander zu liegen kommenden Hälften der Längsstreifen 18, 19 bilden die Schenkel 13, 14 des Bügels 11, an deren Enden der Lagerschaft 15 einer zwischen den Schenkeln 13, 14 drehbar auf dem Lagerschaft 15 angeordneten Umlenkrolle 16 eingespannt ist. Im Bereich des Lagerschaftes 15 sind die Längsstreifen 18, 19 kreisförmig und passend um den Lagerschaft 15 herumgelegt, und zwar derart, daß dieser fest eingefaßt wird. Durch Verstemmen, Verschrauben oder sonstige Maßnahmen kann die feste Verbindung zwischen den Schenkeln 13, 14 und dem Lagerschaft 15 verbessert werden.

Wird der Umlenkbeschlag für größere Umschlingungswinkel von beispielsweise 130° bis 180° verwendet, so weisen die Schenkel bevorzugt anschließend an die innere Oberfläche der Umlenkrolle 16 Ausstanzungen oder Ausformungen 27, 28 auf, welche dafür sorgen, daß ein von der Umlenkrolle 16 abgleitender Sicherheitsgurt nicht gestaucht, sondern sanft umgelenkt wird.

Die Ausformungen 27, 28 können bereits beim Ausstanzen des Stanzteils 17 mit vorgesehen werden, so daß die Innenränder der Schenkel 13, 14 nach der Fertigstellung die in Figur 2 bei 27, 28 wiedergegebene Form aufweisen.

Nach der Fertigstellung des Bügels 11 durch Faltung des Stanzteils 17 kann der Bügel 11 noch ganz oder teilweise mit Kunststoff umspritzt werden, wobei durch geeignete Ausbildung der Lagerösen 29, 30 an den freien Enden der Schenkel 13, 14 dafür gesorgt werden kann, daß der Kunststoff, mit dem das Metall umspritzt wird, das Gleitlager bildet. Aufgrund der Umspritzung mit Kunststoff werden die bei der Herstellung entstehenden Schlitze zwischen den aufeinanderliegenden Blechteilen vollständig abgedeckt und sind somit nach außen nicht sichtbar. Ein Beschichten mit einer Lackierung oder einer reibungsvermindernden Beschichtung ist ebenfalls möglich. Auch kann ein Kunststofformteil auf den Bügel aufgesetzt werden.

In Figur 6 ist eine zu Figur 4 alternative Ausführungsform gezeigt, bei welcher die Schenkel 18, 19 mehrfach abgebogen sind, um einen möglichst geringen Abstand zu der Wandung zu schaffen, an welcher der Umlenkbeschlag befestigt ist.

### Bezuqszeichenliste

- 11: Bügel
- 13: Schenkel
- 14: Schenkel
- 15: Lagerschaft
- 16: Umlenkrolle
- 17: Stanzteil
- 18: Längsstreifen
- 18': Innenrand
- 19: Längsstreifen
- 19': Innenrand
- 20: Streifen
- 20': Schraubbefestigungsbereich
- 21: Streifen
- 21': Schraubbefestigungsbereich
- 22: Symmetrieachse
- 23: Drehachse
- 24: Schraubloch
- 25: Schraubloch
- 26: Schraubloch
- 27: Ausstanzung (Ausarbeitung)
- 28: Ausstanzung (Ausarbeitung)
- 29: Lageröse
- 30: Lageröse

## Patentansprüche

1. Umlenkbeschlag für Sicherheitsgurte mit einem an einem Fahrzeugteil befestigbaren Bügel (11), der aus zwei miteinander verbundenen Schenkeln (13, 14) besteht, zwischen deren freien Enden sich ein Lagerschaft (15) erstreckt, auf dem eine Umlenkrolle (16) um eine Drehachse (23) drehbar gelagert ist, deren Länge zumindest im wesentlichen der Breite des darüber geführten Gurtes entspricht,
dadurch gekennzeichnet,
daß der Bügel (11) aus einem um den Lagerschaft (15) herum auf sich selbst zusammengefalteten, insbesondere aus Stahlblech bestehenden Stanzteil (17) besteht, das zwei zu einer Symmetrieachse (22) im wesentlichen spiegelsymmetrische Hälften aufweist und vorzugsweise Rahmenartig ausgebildet ist.

2. Umlenkbeschlag nach Anspruch 1,
dadurch gekennzeichnet,
daß das gefaltete Stanzteil zumindest teilweise mit Kunststoff umspritzt ist.

3. Umlenkbeschlag nach Anspruch 1 oder 2,
dadurch gekennzeichnet,
daß das gefaltete Stanzteil mit einer Kunststofführung versehen ist.

4. Umlenkbeschlag nach einem der vorhergehenden Ansprüche,
dadurch gekennzeichnet,
daß das Stanzteil (17) im wesentlichen sechseckig ausgebildet ist, wobei die Innenränder (18', 19') zweier parallel gegenüberliegender Abschnitte (18, 19) einen Ab-stand gleich wie oder geringfügig größer als die Länge der Umlenkrolle (16) aufweisen, wobei an zwei gegenüber-liegenden Eckbereichen vorzugsweise ein verbreiterter, insbesondere abgerundeter Schraubbefestigungsbereich (20', 21') vorgesehen ist.

5. Umlenkbeschlag nach einem der vorhergehenden Ansprüche,
dadurch gekennzeichnet,
daß die Außenkontur des Stanzteils (17) annähernd oval ist.

6. Umlenkbeschlag nach einem der vorhergehenden Ansprüche,
dadurch gekennzeichnet,
daß Schraubbefestigungsbereiche (20', 21') durch eine Ausbuchtung zum Innenraum des Stanzteils (17) hin gebildet sind.

7. Umlenkbeschlag nach einem der vorhergehenden Ansprüche,
dadurch gekennzeichnet,
daß aufeinanderliegende Streifen (18, 19) nahe eines Schraubbefestigungsbereiches (20', 21') und/oder nahe der Drehachse (23) abgebogen sind.

8. Umlenkbeschlag nach Anspruch 7,
dadurch gekennzeichnet,
daß der Abbiegungswinkel 20 bis 50°, vorzugsweise 30 bis 40° und insbesondere etwa 35° beträgt.

9. Umlenkbeschlag nach einem der vorhergehenden Ansprüche,
dadurch gekennzeichnet,
daß aufeinanderliegende Streifen mehrfach abgebogen sind.

10. Umlenkbeschlag nach einem der Ansprüche 1 bis 9,
dadurch gekennzeichnet,
daß Material angrenzend an die Oberfläche der Umlenkrolle (16) so kurvenartig ausgestanzt bzw. nachträglich ausgearbeitet ist, daß der Innenrand der Schenkel (13, 14) stetig in die Oberfläche der Umlenkrolle (16) übergeht und in Richtung von der Oberfläche weg zunächst konkav gekrümmt ist und dann vorzugsweise in einen geradlinigen Innenrand der Schenkel (13, 14) übergeht.

11. Verfahren zur Herstellung eines Umlenkbeschlages für Sicherheitsgurte nach zumindest einem der Ansprüche 1 bis 10
dadurch gekennzeichnet,
daß der Bügel (12) aus einem um den Lagerschaft (15) herum auf sich selbst zusammengefalteten, insbesondere aus Stahlblech bestehenden Stanzteil (17) gebildet wird, das nach der Faltung vorzugsweise mit Kunststoff umspritzt wird.
